# EUROPEAN PATENT SPECIFICATION

(11) **EP 3 120 988 B1**
(45) Date of publication and mention of the grant of the patent: **11.07.2018**
(21) Application number: 15880104.3
(22) Date of filing: 27.11.2015
(51) Int. Cl.: B29C 45/16, B29C 45/26, B29K 75/00, B29L 9/00, B29C 45/14, B29K 101/10

(54) **METHOD FOR PRODUCING THERMOSETTING RESIN MOLDED ARTICLE**
VERFAHREN ZUR HERSTELLUNG EINES WÄRMEHÄRTBAREN HARZFORMARTIKELS
PROCÉDÉ DE FABRICATION D'UN ARTICLE MOULÉ EN RÉSINE THERMODURCISSABLE

(30) Priority: 29.01.2015 JP 2015014903
(43) Date of publication of application: 25.01.2017
(73) Proprietor: Proto Co., Ltd., Oura-gun, Gunma 370-0613 (JP)
(72) Inventor: FURUYA, Tamio, Gunma 370-0613 (JP)
(74) Representative: Plougmann Vingtoft a/s
(86) International application number: PCT/JP2015/083346
(87) International publication number: WO 2016/121212

(56) References cited:
- JP-A- 2005 169 827
- JP-A- 2011 231 241
- JP-A- 2011 231 241
- JP-A- 2013 184 294
- JP-A- 2013 248 867
- JP-A- 2014 060 237
- JP-A- 2014 060 237
- US-B1- 6 455 147

## Description

### TECHNICAL FIELD

The present invention relates to a method for producing a thermosetting resin molded article. More particularly, the present invention relates to a method for producing a thermosetting resin molded article, in which emboss or decorative pattern can be formed at the same time of molding a thermosetting resin composition by using a decorative film.

### BACKGROUND ART

The major method for decorating a thermosetting resin molded article (plastic) is in-mold molding method which is capable of decreasing the lead time after molding and controlling the total yield of the article during the process. In the in-mold molding method, the design of a decorative film is transferred to the thermosetting resin by using molds for an injection molding machine between which the decorative film having the previously-formed design is disposed and by forming a thermosetting resin by injection (injection molding). The method is categorized to in-mold lamination method in which the decorative film is fully left on the molded article, or in-mold transfer method in which the design surface of the decorative film is only transferred to the article and the base film of the decorative film is peeled. The design surface in in-mold transfer method is formed by gravure printing or painting.

For forming decorative pattern on the surface of the thermosetting resin with the decorative film during injection molding, the decorative film should not be changed at the high molding pressure (about from 300 to 700 kg/cm²) and high temperature of the resin (from 150 to 350°C) for injection molding. Therefore, as the resin for the base film as a substrate for the decorative film, a polycarbonate (PC), a poly(methyl methacrylate) (PMMA), a poly(ethylene terephthalate) (PET), or a crosslinked olefin thermoplastic elastomer (TPO) is commonly used. The decorative film is generally composed of a base film / a release layer / a protective layer / a decorative layer / an adhesive layer.

Patent Document 1 describes a laminated film for decorative molding, comprising a protective layer, a colored layer, and an adhesive layer in this order, and comprising a film for molding disposed between any two of the layers or on a surface of the protective layer, wherein the protective layer is formed of at least an active hydrogen component (A) and an organic isocyanate component (B) and contains a polyurethane resin (U) having a polycarbonate backbone with an alicyclic group; and wherein at least one of the conditions (1) and (2) is satisfied: the condition (1) is that the polyurethane resin (U) is a polyurethane resin (U1) having an alkoxysilyl group and/or a silanol group in the molecule, and the condition (2) is that the protective layer contains a compound (X) having a glycidyl ether group and an alkoxysilyl group and/or a silanol group, and the polyurethane resin (U) is a polyurethane resin (U2) having an amino group or a carboxyl group and/or the salt thereof.

On the other hand, for decorating the surface during reaction injection molding (RIM) of the thermosetting resin, the decoration is commonly performed by in-mold coating for painting the surface of the mold, or by painting, printing, or transferring method after forming the molded article of the thermosetting resin by molding. In-mold coating method has a limitation that the only one color can be used and that the removing angle of the article from the mold is limited even if emboss can be formed. In the decorating method after molding, the releasing agent on the surface of the molded article must be removed and emboss cannot be formed. Additionally, there is a concern that the lead time after molding may be increased and the yield may be decreased due to the quality failure of the molded article during the secondary processing.

### PRIOR ART DOCUMENT

### PATENT DOCUMENT

Patent Document 1: WO 2013/99829 A1

JP 2014 060237 discloses a method for producing a thermosetting resin molded article whereby resin is injected toward the contact bonding layer side of a decoration film positioned in a metal mold.

JP 2011 231241 discloses a decorative film suitable for over-molding with a thermosetting resin.

### SUMMARY OF THE INVENTION

### PROBLEM TO BE SOLVED BY THE INVENTION

The decorating method such as in-mold transfer method is possible to be applied to reaction injection molding (RIM) of the thermosetting resin composition. However, since the molding pressure of the thermosetting resin composition for RIM is generally from 1 to 10 kg/cm² and the molding temperature is generally from 40 to 85°C, both of which are low, there is a problem that the decorative film using a PC, a PMMA, a PET, or a crosslinked TPO as the substrate has low conformity with the shape of the mold. On the other hand, if the decorative film is formed at a high temperature under vacuum, the conformity is improved. However, when three-dimensional emboss is formed on the film, there is a problem that emboss are distorted.

Accordingly, an object of the present invention is to provide a method for producing a thermosetting resin molded article, in which emboss or decorative pattern can be formed at the same time of molding a thermosetting resin composition.

### MEANS OF SOLVING THE PROBLEM

The present invention is a method for producing a thermosetting resin molded article, comprising:
disposing a decorative film having a base film and a decorative layer on at least a design forming area in a surface of a shaping mold so that the decorative layer is faced inwardly; and
injecting a thermosetting resin composition into a cavity of the shaping mold and thermally curing the thermosetting resin composition, to obtain a thermosetting resin molded article having the decorative film formed on the surface of the cured material of the thermosetting resin composition;
wherein the base film used is a film which has a tensile elongation at break of more than 500% and a tensile stress at 100% of 0.1 MPa to 2.5 MPa, at the thermal curing temperature for the thermosetting resin composition.

### EFFECT OF THE INVENTION

The present invention can provide a method for producing a thermosetting resin molded article, in which emboss or decorative pattern can be formed at the same time of molding a thermosetting resin composition.

### BRIEF DESCRIPTION OF DRAWINGS

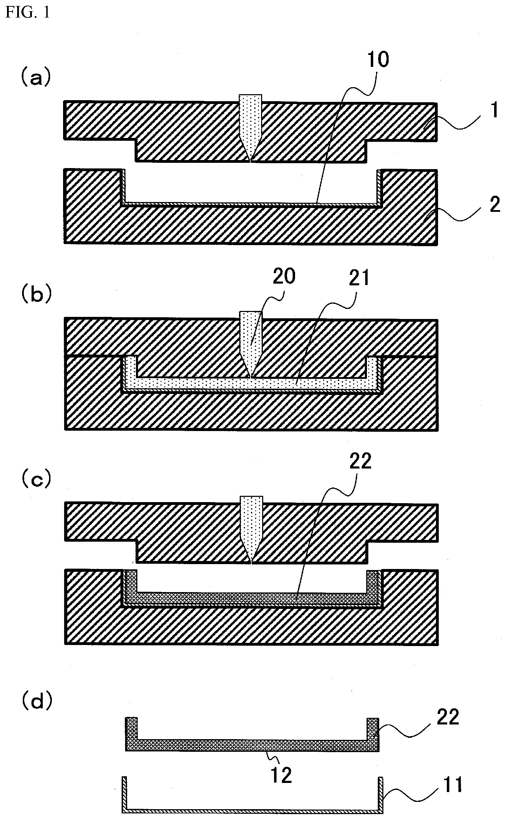

FIG. 1 is a schematic sectional view showing a process for producing a thermosetting resin molded article according to one embodiment of the present invention. FIG. 1(a) shows a configuration in which a decorative film was disposed on a shaping mold. FIG. 1(b) shows a configuration in which the shaping mold was cramped and a thermosetting resin composition was injected into the shaping mold. FIG. 1(c) shows a configuration in which the thermosetting resin composition was thermally cured and the shaping mold was opened. FIG. 1(d) shows a configuration in which the thermosetting resin molded article was removed and a base film of the decorative film was peeled.

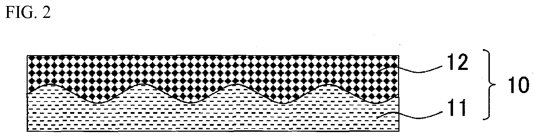

FIG. 2 is a schematic sectional view showing one example of the configuration of the decorative film used in the present invention.

### MODE FOR CARRYING OUT THE INVENTION

FIG. 1 shows one example of a process for producing a thermosetting resin molded article according to one embodiment of the present invention. In the present invention, a thermosetting resin composition is injected into a cavity of a shaping mold and then the thermosetting resin composition is thermally cured, as referred to as reaction injection molding (RIM). In this case, emboss or pattern can be formed on the surface of the resulting thermosetting resin molded article obtained by RIM without embossing it directly.

In the present invention, as shown in FIG. 1(a), a decorative film 10 is firstly disposed on at least a design forming area in a surface of a shaping mold. In FIG. 1(a), the shaping mold is composed of a male mold (upper mold) 1 having a convex area on the lower surface and a female mold (lower mold) 2 having a concave area on the upper surface. The male mold (upper mold) 1 and the female mold (lower mold) 2 may be made of a metal such as aluminum, or made of a resin.

The decorative film 10 has a base film 11 and a decorative layer 12, as shown in the configuration example of FIG. 2, and is disposed on a surface of the shaping mold so that the decorative layer 12 is faced inwardly. Thus, the decorative layer 12 is disposed on the surface of the thermosetting resin molded article to be obtained by RIM. The base film 11 has a role as a substrate for the decorative layer 12. The base film 11 may be peeled afterward, or be disposed along with the decorative layer 12 on the surface of the thermosetting resin molded article to form a decorative pattern together.

On the surface of the base film 11 on which the decorative layer 12 is disposed, three-dimensional emboss such as leather pattern or wood grain pattern is preferably formed. Thus, the structure of the three-dimensional emboss is transferred to the decorative layer 12, and the thermosetting resin molded article having the decorative layer 12 with the three-dimensional emboss formed on the surface of the cured material 22 of the thermosetting resin composition 21 can be obtained. For example, the base film 11 having emboss can be formed by transferring the pattern of an embossing roll to the surface of the base film 11.

In an embodiment which does not fall under the scope of the present invention, a film, which is formed of a non-crosslinked olefin thermoplastic resin and which has a tensile elongation at break of 500% or more and a tensile stress at 100% of 0.1 MPa or more, at the thermal curing temperature for the thermosetting resin composition for RIM, is used as the base film. When the tensile elongation at break is 500% or more, the conformity of the thermosetting resin composition is improved, and thereby the decorative pattern can be formed on the surface of the thermosetting resin molded article without changing the shape of the article. When the tensile stress at 100% is 0.1 MPa or more, even if the three-dimensional emboss is formed on the surface of the base film on which the decorative layer is disposed, and then the decorative pattern is formed with the decorative layer having the emboss, the three-dimensional emboss is not distorted. The tensile elongation at break of the thermosetting resin composition is preferably more than 500% (it is not broken at 500% tensile elongation).

In the embodiments falling under the scope of the present invention, the tensile stress at 100% is preferably 0.5 MPa or more, more preferably 1.0 MPa or more, and further preferably 2.0 MPa or more, while the tensile stress at 100% is of 0.1 MPa to 2.5 MPa.

The tensile elongation at break and the tensile stress at 100% of the base film are measured by a tensile test at an initial distance between zippers of 60 mm and a tensile speed of 200 mm/min.

The base film 11 is preferably formed of a non-crosslinked olefin thermoplastic resin. Examples of the olefin thermoplastic resin include polyolefins such as polyethylenes and polypropylenes; and olefin thermoplastic copolymers such as ethylene-α-olefin copolymers, ethylene-vinyl acetate copolymers, ethylene-methyl methacrylate copolymers, ethylene-ethyl acrylate copolymers, ethylene-n-butyl acrylate copolymers, and propylene-α-olefin copolymers. Also, olefin thermoplastic elastomers (TPO) can be used.

These are preferably a non-crosslinked resin (a resin without crosslink treatment). Using a non-crosslinked resin, the base film tends to be a film having a tensile elongation at break of 500% or more and a tensile stress at 100% of 0.1 MPa or more, at the thermal curing temperature for the thermosetting resin composition for RIM.

As the base film in the present invention, (1) a film which has a tensile elongation at break of more than 500% and a tensile stress at 100% of 0.1 MPa to 2.5 MPa is used as the base film, at the thermal curing temperature for the thermosetting resin composition.

For forming decorative pattern on the surface of the thermosetting resin with the decorative film during injection molding, the decorative film should not be changed at the high molding pressure (about from 300 to 700 kg/cm²) and high temperature of the resin (from 150 to 350°C) for injection molding. Therefore, as the resin for the base film as a substrate for the decorative film, a polycarbonate (PC), a poly(methyl methacrylate) (PMMA), a poly(ethylene terephthalate) (PET), or a crosslinked olefin thermoplastic elastomer (TPO) is commonly used. However, in the case of RIM of the thermosetting resin composition, the pressure is lower than that for injection molding as described below and a non-crosslinked olefin thermoplastic elastomer (TPO) is preferred used. Thus, the conformity of the thermosetting resin composition is improved, and thereby the decorative pattern can be formed on the surface of the thermosetting resin molded article without changing the shape of the article.

The decorative layer 12 can be formed of a paint composition obtained by adding a colorant such as pigment or dye to a resin. More specifically, after a three-dimensional emboss is formed on the surface of the base film 11 as needed, the paint composition can be applied on the film to form the decorative layer 12. In view of the adhesiveness against the thermosetting resin composition for RIM, the base resin of the paint composition for forming the decorative layer 12 is preferably a thermosetting resin, and more preferably an acryl urethane resin. In the case where a three-dimensional emboss is formed on the surface of the base film 11 on which the decorative layer 12 is disposed, the other surface of the base film 11 opposed to the decorative layer 12 may be a flat surface as shown in FIG. 2, or a concave-convex pattern may be formed by a three-dimensional emboss forming on the base film 11.

The thickness of the decorative film 10 is preferably from 0.025 to 0.8 mm, and more preferably from 0.3 to 0.5 mm. The thickness of the base film 11 is preferably from 0.02 to 0.7 mm, and more preferably from 0.03 to 0.5 mm. The thickness of the decorative layer 12 is preferably from 0.005 to 0.1 mm, and more preferably from 0.02 to 0.06 mm. When three-dimensional emboss is formed on the surface of the base film 11 on which the decorative layer 12 is disposed, the thicknesses of the base film 11 and the decorative layer 12 respectively mean the average thereof.

The decorative film 10 may have another layer except for the base film 11 and the decorative layer 12. Examples of the layer except for the base film 11 and the decorative layer 12 include a release layer, a protective layer, and an adhesive layer. Although the configuration of the decorative film is generally composed of a base film / a release layer / a protective layer / a decorative layer / an adhesive layer, the decorative film used in the present invention may also be composed of a base film / a decorative layer only.

The decorative film 10 may be disposed after forming in conformity with the shape of at least a design forming area in a surface of a shaping mold, or may be formed in conformity with the shape by sucking air from a sucking port (not shown) mounted on the surface of the female mold (lower mold) 2 after disposing the film on the female mold (lower mold) 2 in FIG. 1(a). Alternatively, as described above, since the decorative film used in the present invention has an improved conformity, the next step (RIM step) may be performed without forming the decorative film 10 in conformity with the shape of the region.

After that, in the present invention, as shown in FIG. 1(b), the shaping mold was cramped and a urethane resin composition 21 was injected into the cavity of the shaping mold. Then, as shown in FIG. 1(c), the urethane resin composition 21 in the cavity of the shaping mold was thermally cured and the shaping mold was opened. The resulting thermosetting resin molded article was removed from the shaping mold to obtain the thermosetting resin molded article having the decorative film 10 formed on the surface of the cured material 22 of the thermosetting resin composition 21. After that, a burr is removed as needed.

In FIG. 1(b), the thermosetting resin composition 21 is injected from an inlet 20 formed in the male mold (upper mold) 1. Examples of the thermosetting resin composition in a liquid form include urethane resin compositions, epoxy resin compositions, polyester resin compositions, and phenol resin compositions, and urethane resin compositions are preferable. The pressure for injecting the thermosetting resin composition into the cavity of the shaping mold for RIM is generally from 1 to 10 kg/cm².

The thermal curing temperature for the thermosetting resin composition is preferably from 30 to 110°C, more preferably from 40 to 85°C, and is, for example, 65°C. The thermal curing can be performed by continuously heating the male mold (upper mold) 2 and the female mold (lower mold) 4 with a heating means not shown in Figures. The temperature of the shaping mold 1 may be the same as the thermal curing temperature for the thermosetting resin composition. The temperature is preferably from 30 to 110°C, more preferably from 40 to 85°C, and is maintained, for example, at 65°C. The thermosetting resin composition is cured by urethane reaction when a urethane resin composition is used as the thermosetting resin composition. When the composition is cured by urethane-urea reaction, the reaction time can be decreased and the heat resistance of the resulting article can be increased.

Furthermore, the base film 11 may be peeled from the resulting thermosetting resin molded article (FIG. 1(d)). Thus, the thermosetting resin molded article having the decorative layer 12 formed on the surface of the cured material 22 of the thermosetting resin composition 21 can be obtained. When three-dimensional emboss is formed on the surface of the base film on which the decorative layer is disposed, the emboss is transferred to the decorative layer 12 and the thermosetting resin molded article having the decorative layer 12 having the three-dimensional emboss formed on the surface of the cured material 22 of the thermosetting resin composition 21 can be obtained. Since the base film 11 peeled from the thermosetting resin molded article has the undistorted three-dimensional emboss formed on the surface, the film can be used many times as the decorative film by applying the decorative layer, for example, by painting.

As described above, by RIM of the thermosetting resin composition according to the method of the present invention, emboss or pattern is easily formed on the thermosetting resin composition while molding the composition, in particular, the thermosetting resin molded article having emboss or pattern can be obtained. Since emboss is not formed on the shaping mold itself, the present invention has an advantage that any conventional shaping mold which is used for another molding without embossing or pattern decorating can be used.

### EXAMPLES

### <Example 1>

Firstly, a decorative film 10 composed of a base film 11 and a decorative layer 12 was disposed on a female mold (lower mold) 2 of a shaping mold so that the decorative layer 12 was faced inwardly. By sucking air from a sucking port (not shown) formed on the female mold (lower mold) 2, the decorative film 10 was formed in conformity with the shape of the design forming area in the surface of the shaping mold, as shown in FIG. 1(a).

As the base film 11, a non-crosslinked olefin thermoplastic elastomer (TPO) having a leather pattern on the surface, which is formed by transferring the pattern of an embossing roll to the surface was used. The decorative layer 12 made of an acryl urethane resin was formed on the base film 11 (the thickness of the decorative film 10: 0.38 mm, the thickness of the base film 11: 0.35 mm, and the thickness of the decorative layer 12: 0.03 mm). The tensile elongation at break of the base film 11 at 65°C was more than 500% (it was not broken at 500% elongation) and the tensile stress at 100% at 65°C was 2.4 MPa.

After that, as shown in FIG. 1(b), the shaping mold was cramped. A urethane resin composition was injected into the cavity of the shaping mold and then the urethane resin composition was thermally cured. The urethane resin composition was cured at 65°C for 6 minutes. After that, as shown in FIG. 1(c), the shaping mold was opened to remove a urethane resin molded article, and then a burr was removed. Furthermore, as shown in FIG. 1(d), the urethane resin molded article having the decorative layer 12 formed on the surface was obtained by peeling the base film 11. The decorative layer 12 was formed on the surface of the urethane resin molded article without distorting the leather pattern.

### <Example 2>

The operations were carried out in the same manner as in Example 1 except that a wood grain pattern was formed on the surface of the base film 11 by transferring the pattern of an embossing roll to the surface. The decorative layer 12 was formed on the surface of the resulting urethane resin molded article without distorting the wood grain pattern.

### <Comparative Example 1>

The operations were carried out in the same manner as in Example 1 except that an olefin thermoplastic elastomer (TPO) with crosslink treatment was used as the base film 11. The tensile elongation at break of the base film 11 at 65°C was 485% and the tensile stress at 100% at 65°C was 4.0 MPa. The decorative layer 12 of the resulting urethane resin molded article was coming off. The base film 11 could not be formed in conformity with the shape of the shaping mold having a concave R.

### <Comparative Example 2>

The decorative film 10 used in Example 1 was molded at 140°C with a vacuum molding machine. However, the leather pattern formed on the surface of the base film 11 was distorted. The tensile elongation at break of the base film 11 at 140°C was more than 500% and the tensile stress at 100% at 140°C was 0.06 MPa.

### DENOTATION OF REFERENCE NUMERALS

- 1: male mold (upper mold)
- 2: female mold (lower mold)
- 10: decorative film
- 11: base film
- 12: decorative layer
- 20: inlet
- 21: thermosetting resin composition
- 22: cured material

## Claims

1. A method for producing a thermosetting resin molded article, comprising:
disposing a decorative film (10) having a base film (11) and a decorative layer (12) on at least a design forming area in a surface of a shaping mold (1,2) so that the decorative layer is faced inwardly; and
injecting a thermosetting resin composition (21) into a cavity of the shaping mold and thermally curing the thermosetting resin composition (21), to obtain a thermosetting resin molded article having the decorative film (10) formed on the surface of the cured material (22) of the thermosetting resin composition (21);
wherein the base film (11) used is a film which has a tensile elongation at break of more than 500% and a tensile stress at 100% of 0.1 MPa to 2.5 MPa, at the thermal curing temperature for the thermosetting resin composition (21).

2. The method for producing a thermosetting resin molded article according to Claim 1, wherein the base film (11) is formed of a non-crosslinked olefin thermoplastic resin.

3. The method for producing a thermosetting resin molded article according to Claim 1 or 2, wherein the pressure for injecting the thermosetting resin composition (21) into the cavity of the mold (1,2) is from 1 to 10 kg/cm².

4. The method for producing a thermosetting resin molded article according to any one of Claims 1 to 3, wherein the thermal curing temperature for the thermosetting resin composition (21) is from 30 to 110°C.

5. The method for producing a thermosetting resin molded article according to any one of Claims 1 to 4, wherein the thermosetting resin composition (21) is a thermosetting urethane resin composition.

6. The method for producing a thermosetting resin molded article according to any one of Claims 1 to 5, further comprising:
peeling the base film (11) from the thermosetting resin molded article.

7. The method for producing a thermosetting resin molded article according to Claim 6, wherein three-dimensional emboss is formed on the surface of the base film (11) on which the decorative layer (12) is disposed.

## Patentansprüche

1. Verfahren zum Herstellen eines geformten Artikels aus wärmehärtbarem Harz, umfassend:
Anordnen einer dekorativen Folie (10), die eine Trägerfolie (11) und eine dekorative Schicht (12) aufweist, auf zumindest einem designbildenden Bereich auf einer Oberfläche einer Formgebungsform (1, 2), sodass die dekorative Schicht nach innen zeigt; und
Injizieren einer Zusammensetzung aus wärmehärtbarem Harz (21) in einen Hohlraum der Formgebungsform und thermisches Aushärten der Zusammensetzung aus wärmehärtbarem Harz (21), um einem geformten Artikel aus wärmehärtbarem Harz zu erhalten, bei dem die dekorative Folie (10) auf der Oberfläche des ausgehärteten Materials (22) der Zusammensetzung aus wärmehärtbarem Harz (21) gebildet ist;
wobei die verwendete Trägerfolie (11) eine Folie ist, die eine Bruchdehnung von mehr als 500 % und eine Zugfestigkeit bei 100 % von 0,1 MPa bis 2,5 MPa bei der thermischen Aushärttemperatur für die Zusammensetzung aus wärmehärtbarem Harz (21) aufweist.

2. Verfahren zum Herstellen eines geformten Artikels aus wärmehärtbarem Harz nach Anspruch 1, wobei die Trägerfolie (11) aus einem nicht quervernetzten thermoplastischen Olefinharz gebildet ist.

3. Verfahren zum Herstellen eines geformten Artikels aus wärmehärtbarem Harz nach Anspruch 1 oder 2, wobei der Druck zum Injizieren der Zusammensetzung aus wärmehärtbarem Harz (21) in den Hohlraum der Form (1, 2) 1 bis 10 kg/cm² beträgt.

4. Verfahren zum Herstellen eines geformten Artikels aus wärmehärtbarem Harz nach einem der Ansprüche 1 bis 3, wobei die thermische Aushärttemperatur für die Zusammensetzung aus wärmehärtbarem Harz (21) 30 bis 110 °C beträgt.

5. Verfahren zum Herstellen eines geformten Artikels aus wärmehärtbarem Harz nach einem der Ansprüche 1 bis 4, wobei die Zusammensetzung aus wärmehärtbarem Harz (21) eine wärmehärtbare Urethanharzzusammensetzung ist.

6. Verfahren zum Herstellen eines geformten Artikels aus wärmehärtbarem Harz nach einem der Ansprüche 1 bis 5, ferner umfassend:
Abziehen der Trägerfolie (11) von dem geformten Artikel aus wärmehärtbarem Harz.

7. Verfahren zum Herstellen eines geformten Artikels aus wärmehärtbarem Harz nach Anspruch 6, wobei eine dreidimensionale Prägung auf der Oberfläche der Trägerfolie (11) gebildet wird, auf der die dekorative Schicht (12) angeordnet wird.

## Revendications

1. Procédé pour la fabrication d'un article moulé en résine thermodurcissable, comprenant :
la disposition d'un film décoratif (10) possédant un film de base (11) et une couche décorative (12) sur au moins une zone de formation de conception dans une surface d'un moule de mise en forme (1, 2) afin que la couche décorative soit dirigée vers l'intérieur ; et
l'injection d'une composition de résine thermodurcissable (21) dans une cavité du moule de mise en forme et le durcissement thermique de la composition de résine thermodurcissable (21) pour obtenir un article moulé en résine thermodurcissable possédant le film décoratif (10) formé sur la surface du matériau durci (22) de la composition de résine thermodurcissable (21) ;
ledit film de base (11) utilisé étant un film possédant un allongement en traction à la rupture supérieur à 500 % et une contrainte de traction à 100 % allant de 0,1 MPa à 2,5 MPa, à la température de durcissement thermique pour la composition de résine thermodurcissable (21).

2. Procédé pour la fabrication d'un article moulé en résine thermodurcissable selon la revendication 1, ledit film de base (11) étant formé d'une résine thermoplastique d'oléfine non réticulée.

3. Procédé pour la fabrication d'un article moulé en résine thermodurcissable selon la revendication 1 ou 2, ladite pression pour l'injection de la composition de résine thermodurcissable (21) dans la cavité du moule (1, 2) allant de 1 à 10 kg/cm².

4. Procédé pour la fabrication d'un article moulé en résine thermodurcissable selon l'une quelconque des revendications 1 à 3, ladite température de durcissement thermique pour la composition de résine thermodurcissable (21) allant de 30 à 110°C.

5. Procédé pour la fabrication d'un article moulé en résine thermodurcissable selon l'une quelconque des revendications 1 à 4, ladite composition de résine thermodurcissable (21) étant une composition de résine d'uréthane thermodurcissable.

6. Procédé pour la fabrication d'un article moulé en résine thermodurcissable selon l'une quelconque des revendications 1 à 5, comprenant en outre :
le détachement du film de base (11) de l'article moulé en résine thermodurcissable.

7. Procédé pour la fabrication d'un article moulé en résine thermodurcissable selon la revendication 6, un relief à trois dimensions étant formé sur la surface du film de base (11) sur lequel la couche décorative (12) est disposée.
